# EUROPÄISCHE PATENTSCHRIFT

(11) **EP 2 290 346 B1**
(45) Veröffentlichungstag und Bekanntmachung des Hinweises auf die Patenterteilung: **03.10.2018**
(21) Anmeldenummer: 10173516.5
(22) Anmeldetag: 20.08.2010
(51) Int. Cl.: G01M 17/02

(54) **Reifentestanlage**
Tyre testing assembly
Installation d'essai de pneus

(30) Priorität: 27.08.2009 AT 53709 U
(43) Veröffentlichungstag der Anmeldung: 02.03.2011
(73) Patentinhaber: AVL List GmbH, 8020 Graz (AT)
(72) Erfinder: Dank, Matthias, 8045, Graz (AT); Eitzinger, Johann, 8010, Graz (AT); Resl, Michael, 8042, Graz (AT)
(74) Vertreter: Patentanwälte Pinter & Weiss OG

(56) Entgegenhaltungen:
- JP-A- H07 318 460
- JP-A- S57 110 934
- US-A- 4 502 327
- US-A1- 2004 020 065

## Beschreibung

Die Erfindung betrifft eine Reifentestanlage, bestehend aus einer von zumindest einem Reifen kontaktierbaren Bahn sowie einer dieser Bahn folgenden Zwangsführung, beispielsweise in Form von zumindest einer Schiene.

Um die Eigenschaften von Fahrzeugreifen zu testen wurden bislang verschiedene Anordnungen vorgeschlagen. So ist es für einen stationären Prüfbetrieb üblich, den Reifen mit einer Rolle oder einem Band zu kontaktieren, welche mittels steuerbarer Einrichtungen antreibbar sind, um so die Eigenschaften beim Abrollen der Reifen überprüfen zu können. Sowohl das Band als auch die Rolle sind jedoch in keiner Weise mit den tatsächlichen Oberflächen zu vergleichen, auf welchen der Reifen bestimmungsgemäß am Fahrzeug verwendet wird. Auch ist man bei den Prüfläufen an die Trägheit der Anlagen gebunden.

Reifentests auf realen Fahrbahnen sind beispielsweise durch Montage der Reifen an LKW-Anhängern oder speziellen Reifentest-Anhängern möglich. Derartige Tests sind aber durch die Bindung an die Spezifikation des LKW bzw. des ziehenden Fahrzeuges betreffend der gesamten Rahmenbedingungen beschränkt und gestatten überdies keinen raschen Wechsel des Untergrundes während der Testfahrt bzw. den Wechsel der Oberflächenbeschaffenheit, auf welcher der Reifen getestet werden soll. Beispielsweise in der DE 102006026436 A1 ist ein Reifentest mit einem über eine reale Straße fahrenden Testfahrzeug beschrieben.

Allen Testverfahren mit über reale Straße geführten Testfahrzeugen ist gemeinsam, dass die Rahmenbedingungen betreffend den Reifen selbst, das heißt dessen Anpressdruck, Sturz, Vorspur oder dergleichen, während des Tests kaum bzw. nur mit aufwendigen Mitteln veränderbar sind, und entsprechende Einstellungen bzw. Veränderungen nur schwer konstant eingehalten werden und reproduziert werden können.

In der SU 771497 B ist eine Teststrecke in Form einer Bernoulli-Lemniskate (Cassinische Kurve) geoffenbart, mit einer Führungsschiene, die im Kreuzungsbereich entsprechende Ausschnitte aufweist, während die SU 819609 eine gerade Teststrecke für Reifenverschleißmessungen unter seitlichen Schubkräften zum Gegenstand hat. Dabei wird ein Testfahrzeug unter einem gewissen Winkel zur Teststreckenachse auf der Führungsschiene fix positioniert und bewegt sich, angetrieben vom Fahrzeugantrieb, von einem Ende der Strecke zum anderen, wobei bei Kontakt des Fahrzeuges mit einem Anschlag die Steuereinheit der Testanlage das Fahrzeug umschaltet. Die Besonderheit beider Teststrecken besteht darin, dass zwecks Beibehalten identischer Testbedingungen für verschiedenen Testreifen das Testfahrzeug mit der auf der Teststrecke vorhandenen Führungsschiene bzw. einem Führungsgleis durch z.B. eine Laufrolle verbunden ist.

Die JP S57 110934 A zeigt eine Reifentestanlage mit einem im Kreis bewegten Prüfschlitten, auf dem ein Reifen montiert ist, der auf eine Bahn abrollt, wobei der Reifen angetrieben ist, um den Prüfschlitten im Kreis zu bewegen. Für die Prüfung ist vorgesehen, dass der Neigungswinkel des Reifens gegenüber der Bahn verändert werden kann.

Die Aufgabe der vorliegenden Erfindung bestand daher darin, eine Reifentestanlage anzugeben, bei welcher Reifentests unter möglichst realitätsnahen Bedingungen, jedoch mit vielfältigen, einfach und genau reproduzierbaren Rahmenbedingungen möglich ist.

Zur Lösung dieser Aufgabenstellung ist eine Reifentestanlage vorgesehen, gekennzeichnet durch einen durch die Zwangsführung geführten und von dem zumindest einen Reifen unabhängig autonom angetriebenen und/oder bremsbaren Prüfschlitten, an welchem zumindest ein Reifen montierbar ist und der Prüfschlitten Einrichtungen zum autonomen und vom Prüfschlitten unabhängigen Antreiben und/oder Bremsen des zumindest einen Reifen aufweist. Über den autonomen Prüfschlitten können weit unterschiedlichere Einflüsse auf den Reifen selbst als durch ein Testfahrzeug ausgeübt werden, um unterschiedlichste Belastungen und Geometrien hervorzurufen. Damit können aussagekräftige und reproduzierbare Reifentests ohne Einschränkung der überprüfbaren Parameter und Rahmenbedingungen durchgeführt werden. Durch die Wirkung der autonomen und vom Prüfschlitten unabhängigen Brems- und Antriebseinheit ist eine noch höhere Flexibilität in den Bedingungen für die Testläufe gegeben und können beispielsweise realitätsnahe Beschleunigungs- und Bremsvorgänge in den Testlauf integriert werden.

In besonders vorteilhafter Weise ist ein weiteres Ausführungsbeispiel der erfindungsgemäßen Reifentestanlage dadurch gekennzeichnet, dass der Prüfschlitten über den Reifen antreibbar und/oder bremsbar ist, und dass der Prüfschlitten eine entsprechende Kraft aufbringt, um die Schlittengeschwindigkeit zu beeinflussen. Im wesentlichen stellt damit die Antriebs-/Bremseinheit am Schlitten die Gegenkraft zur Antriebs-/Bremseinheit am Rad dar. Der Schlitten "simuliert" in dieser Weise das Fahrzeug und kann seine eigene Masse, die höher ist als die eines echten Fahrzeugs, über die Antriebseinheit kompensieren. So sind neben einfachen Manövern auch komplexere Manöver, wie das Anfahren auf Schnee am Berg möglich, ebenso wie ABS-Bremsvorgänge.

Um ohne großen Aufwand die Reifen auf verschiedenen Fahrbahnbelägen testen zu können weist gemäß einem vorteilhaften Ausführungsbeispiel der Erfindung die Bahn Bereiche unterschiedlicher Oberflächenbeschaffenheit auf. Vorteilhafterweise ist dazu vorgesehen, dass die Bahn in Längsrichtung in mehrere nebeneinander liegende Bereiche mit unterschiedlicher Oberflächenstruktur unterteilt ist.

Um ein und denselben Reifen ohne großen Aufwand auf unterschiedlichen Belägen der Fahrbahn testen zu können ist vorteilhafterweise vorgesehen, dass der Prüfschlitten an der Zwangsführung oder eine Montagestruktur für den Reifen relativ zum Prüfschlitten und/oder zur Bahn verstellbar ist.

Wenn weiters die Reifentestanlage Einrichtungen zum Erzeugen unterschiedlicher Oberflächenbeschaffenheit der Bahn aufweist, beispielsweise eine Beregnungsanlage, können in einfacher Weise und bestmöglich reproduzierbar Reifentests bei unterschiedlicher Oberflächenbeschaffenheit der Fahrbahn durchgeführt werden, ohne von äußeren Einflüssen abhängig zu sein.

In der nachfolgenden Beschreibung soll die Erfindung unter Bezugnahme auf die beigefügten Zeichnungsfiguren näher erläutert werden.

Dabei zeigt die Fig. 1 eine perspektivische Ansicht eines Abschnittes einer erfindungsgemäßen Reifentestanlage, in welcher sich ein Prüfschlitten befindet, die Fig. 2 zeigt in einem schematischen Querschnitt die Bahn einer erfindungsgemäßen Reifentestanlage, und Fig. 3 ist eine schematische Darstellung einer Draufsicht auf eine beispielhafte Auslegung einer erfindungsgemäßen Reifentestanlage.

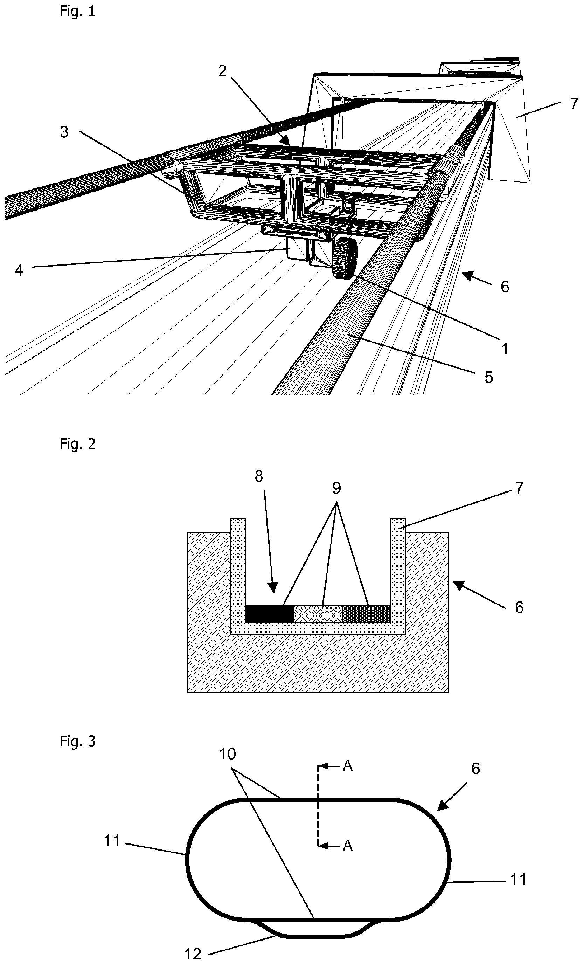

Beim Ausführungsbeispiel einer erfindungsgemäßen Reifentestanlage gemäß Fig. 1 ist ein zu testender Reifen 1 an einem autonom angetriebenen und auch bremsbaren Prüfschlitten 2 montiert. Dieser Prüfschlitten 2 besteht aus einer Basis- oder Tragestruktur 3 und einer Montagestruktur 4 für den Reifen, welche vorzugsweise relativ zur Basisstruktur 3, insbesondere quer zur Fahrtrichtung, manuell oder auch automatisch verstellbar ist. Die Basisstruktur 3 des Prüfschlittens 2 ist im dargestellten Beispiel an zwei Schienen 5 aufgehängt und geführt, welche eine Zwangsführung für den Prüfschlitten 2 bilden. Diese Schienen 5 befinden sich vertikal oberhalb und etwas in Querrichtung gegenüber der vom Reifen kontaktierten Bahn 6 versetzt und sind auf lochartigen Tragestrukturen 7 aufgehängt, die sich seitlich der Bahn 6 am Boden abstützen. Natürlich sind auch andere Arten von Zwangsführungen denkbar, ebenso wie andere relative Positionierungen gegenüber dem Prüfschlitten 2 bzw. der Bahn 6.

Wie in Fig. 2, die einen Querschnitt entlang der Linie A-A der Fig. 3 darstellt, deutlicher zu erkennen ist, besteht die Bahn 6 aus einem im Boden eingelassenen Fundament 7 sowie der eigentlich vom zu prüfenden Reifen kontaktierten Fahrbahn 8. Diese Fahrbahn 8 besteht im dargestellten Fall aus drei in Längsrichtung der Bahn nebeneinander angeordneten Abschnitten mit unterschiedlichem Aufbau und damit unterschiedlicher Oberflächenbeschaffenheit. Durch entsprechende Montage des Reifens am Prüfschlitten 2 bzw. Querverstellung des Prüfschlittens 2 oder der Montagestruktur für den Reifen 1 kann der Reifen 1 mit jeweils einer der unterschiedlichen Belagstypen 9 in Kontakt gebracht werden.

Besonders vorteilhaft ist für länger andauernde Prüfläufe über große Distanzen eine Auslegung der Bahn 6 in einer in sich geschlossenen Form. So könnte beispielsweise die in Fig. 3 dargestellte Auslegung gewählt werden, bei welcher zwei gerade und parallele Bahnabschnitte 10 über im Wesentlichen halbkreisförmig gekrümmte Bahnabschnitte 11 miteinander zu einer geschlossenen, im Wesentlichen ovalen Prüfstrecke verbunden sind. Vorteilhafterweise zweigt von einer der geraden Bahnabschnitte 10 ein Bahnabschnitt ab, welcher zu einem Rüst- und Wartungsbereich 12 führt.

Über die gesamte Länge der Bahn 6 verteilt oder auch nur an bestimmten Punkten können Einrichtungen vorgesehen sein, mit welchen die Oberflächenbeschaffenheit der Bahnabschnitte und der einzelnen Oberflächenbereiche 9 verändert werden können. So können beispielsweise Beregnungsanlagen, Beschneiungsanlagen, Einbringungsanlagen für Sand, Schotter oder dergleichen vorgesehen sein. Auch kann die Bahn 6 mit Kühleinrichtungen ausgestattet sein, um Reifentests auf vereister Fahrbahn durchführen zu können. Für weitere, besonders realitätsnahe Reifentests, können auch Strukturen vorgesehen sein, an welchen verschiedene Hindernisse angebracht werden könne. Allenfalls könnte auch die Bahn 6 bereits von Haus aus in entsprechender Weise ausgeführt sein und Unebenheiten, Längs- und/oder Querstufen und dergleichen aufweisen.

An der Bahn 6 verteilt oder am Prüfschlitten 2 montiert sind vorzugsweise verschiedenste Messeinrichtungen und Sensoren, welche unter anderem Highspeed-Kameras, Stereo-Kameras oder ähnliche optische Messeinrichtungen, als auch akustische Messeinrichtungen umfassen können.

Für unterschiedliche Reifentests können entsprechend angepasste Prüfschlitten 2 eingesetzt werden, während auch in gewissem Umfang einstellbare bzw. adaptierbare Prüfschlitten 2 zum Einsatz kommen können. Besonders vorteilhaft sind Prüfschlitten 2 mit einer Antriebs- und/oder Bremseinrichtung für den Reifen 1, die autonom und unabhängig vom Antrieb - bzw. dem Bremssystem des Prüfschlittens 2 per se - wirken, so dass realitätsnahe Bremsvorgänge in den Reifentestlauf integriert werden können. Der Prüfschlitten 2 kann aber auch allein über den Reifen 1 antreibbar und/oder bremsbar sein. So kann der Prüfschlitten 2 eine definierbare Kraft aufbringen, um die Geschwindigkeit des Prüfschlittens 2 zu beeinflussen. Eine steuerbare bzw. programmierbare Antriebs-/Bremseinheit am Prüfschlitten 2 kann damit eine Gegenkraft zur Antriebs-/Bremseinheit am Reifen 1 erzeugen. Der Prüfschlitten "simuliert" in dieser Weise das Fahrzeug, an welchem der getestete Reifen 1 normalerweise zum Einsatz kommt und kompensiert dabei seine eigene Masse, die höher ist als die eines echten Fahrzeugs, über diese integrierte Antriebseinheit. So sind neben einfachen Manövern auch komplexere Manöver, wie das Anfahren auf Schnee am Berg möglich, ebenso wie ABS-Bremsvorgänge.

## Patentansprüche

1. Reifentestanlage, bestehend aus einer von zumindest einem Reifen (1) kontaktierbaren Bahn (6) sowie einer dieser Bahn folgenden Zwangsführung (5), beispielsweise in Form von zumindest einer Schiene, **gekennzeichnet durch** einen durch die Zwangsführung (5) geführten und von dem zumindest einen Reifen (1) unabhängig autonom angetriebenen und/oder bremsbaren Prüfschlitten (2), an welchem der zumindest eine Reifen (1) montierbar ist, und der Prüfschlitten (2) Einrichtungen zum autonomen und vom Prüfschlitten (2) unabhängigen Antreiben und/oder Bremsen des zumindest einen Reifen (1) aufweist.

2. Reifentestanlage nach Anspruch 1, **dadurch gekennzeichnet, dass** der Prüfschlitten (2) durch den Reifen (1) angetrieben wird und/oder gebremst wird und der Prüfschlitten (2) eine entsprechende Kraft aufbringt, um die Schlittengeschwindigkeit zu beeinflussen.

3. Reifentestanlage nach Anspruch 1 oder 2, **gekennzeichnet durch** die Bahn (6) Bereiche unterschiedlicher Oberflächenbeschaffenheit aufweist.

4. Reifentestanlage nach Anspruch 3, **dadurch gekennzeichnet, dass** die Bahn (6) in Längsrichtung in mehrere, nebeneinander liegende Bereiche (9) mit unterschiedlicher Oberflächenstruktur unterteilt ist.

5. Reifentestanlage nach einem der Ansprüche 1 bis 4, **dadurch gekennzeichnet, dass** der Prüfschlitten (2) an der Zwangsführung (5) oder eine Montagestruktur (4) für den Reifen (1) am Prüfschlitten (2) relativ zum Prüfschlitten und/oder zur Bahn (6) verstellbar ist.

6. Reifentestanlage nach einem der Ansprüche 1 bis 5, **gekennzeichnet durch** Einrichtungen zum Erzeugen unterschiedlicher Oberflächenbeschaffenheit der Bahn (6), beispielsweise eine Beregnungsanlage.

## Claims

1. Tire test system, composed of a track (6) contactable by at least one tire and of a forced guidance (5) following this track, for example, in the form of at least one rail, **characterized by** a test trolley (2) that is guided by the forced guidance (5) and is driven and/or brakable independently autonomously by the tire, on which test trolley the at least one tire (1) is mountable and the test trolley (2) comprises equipment for driving and braking the at least one tire (1) autonomously and independently from the test trolley (2).

2. Tire test system according to Claim 1, **characterized in that** the test trolley (2) tire (1) is driven and/or braked by the tire (1), and the test trolley (2) applies a corresponding force so as to affect the speed of the trolley.

3. Tire test system according to Claims 1 or 2, **characterized by** the track (6) including regions of different surface conditions.

4. Tire test system according to Claim 3, **characterized in that** the track (6) is longitudinally subdivided into multiple, adjacent regions (9) with different surface conditions.

5. Tire test system according to one of Claims 1 through 4, **characterized in that** the test trolley (2) is adjustable at the forced guidance (5) or a mounting structure (4) for the tire (1) is adjustable on the test trolley (2) relative to the test trolley and/or to the track (6).

6. Tire test system according to one of Claims 1 through 5, **characterized by** equipment to generate different surface conditions on the track (6), for example, a rain-generating system.

## Revendications

1. Système de test de pneu comprenant une piste (6), pouvant être en contact avec au moins un pneu (1), ainsi qu'un moyen de guidage forcé (5) suivant ladite piste, par exemple sous la forme d'au moins un rail, **caractérisé par** un chariot d'essai (2) guidé par le moyen de guidage forcé (5) et entraîné et/ou pouvant être freiné de manière autonome indépendamment de l'au moins un pneu (1), chariot d'essai sur lequel l'au moins un pneu (1) peut être monté, et le chariot d'essai (2) comportant des dispositifs d'entraînement autonome et indépendant du chariot d'essai (2) et/ou de freinage de l'au moins un pneu (1).

2. Système de test de pneu selon la revendication 1, **caractérisé en ce que** le chariot d'essai (2) est entraîné et/ou freiné par le pneu (1), et **en ce que** le chariot d'essai (2) exerce une force correspondante pour influer sur la vitesse du chariot.

3. Système de test de pneu selon la revendication 1 ou 2, **caractérisé en ce que** la piste (6) comporte des zones présentant différents états de surface.

4. Système de test de pneu selon la revendication 3, **caractérisé en ce que** la piste (6) est divisée dans la direction longitudinale en plusieurs zones (9) situées côte à côte et présentant différentes structures de surface.

5. Système de test de pneu selon l'une des revendications 1 à 4, **caractérisé en ce que** le chariot d'essai (2) est réglable au niveau du moyen de guidage forcé (5) ou **en ce qu'**une structure de montage (4) destinée au pneu (1) est réglable par rapport au chariot de test et/ou à la piste (6) au niveau du chariot d'essai (2) piste.

6. Système de test de pneu selon l'une des revendications 1 à 5, **caractérisé par** des dispositifs de génération de différents états de surface de la piste (6), par exemple un système d'arrosage.
